# EUROPEAN PATENT APPLICATION

(11) **EP 1 047 051 A2**
(43) Date of publication of application: **25.10.2000**
(21) Application number: 00303274.5
(22) Date of filing: 18.04.2000
(51) Int. Cl.: G11B 7/12, G11B 7/125

(54) **Light emitting module and compatible optical pickup device adopting the same**

(30) Priority: 19.04.1999 KR 9913806; 20.07.1999 KR 9929279
(71) Applicant: SAMSUNG ELECTRONICS CO., LTD., Suwon-City, Kyungki-do (KR)
(72) Inventor: Seong, Pyong-young, Songpa-gu, Seoul (KR); Lee, Yong-jae, Suwon-City, Kyungki-do (KR); Ryoo, Byung-ryul, Suwon-City, Kyungki-do (KR); Son, Yong-ki, Suwon-city, Kyungki-do (KR)
(74) Representative: Chugg, David John

(57) **Abstract**

A light emitting module packaging two light sources (61, 63) emitting two light beams of different wavelengths, and a compatible optical pickup device adopting the module are provided. The light emitting module includes a base (51), first and second light sources (61, 63) installed on the base (51), for emitting laser beams in different wavelength regions, a beam splitter (65) and a monitoring photodetector (67) for monitoring the optical outputs of the first and second light sources (61, 63) by receiving the beams emitted from the first and second light sources (61, 63) and split from the beam splitter (65) in one direction. Also, another light emitting module includes a substrate (111), first and second light sources (121, 131) installed on the substrate (111) for emitting laser beams of first and second wavelengths from both lateral sides thereof, a reflection member (115) for reflecting the laser beam emitted from one lateral side of each of the first and second light sources (61, 63) to proceed in one direction, and first and second monitoring photodetectors (125, 135) for monitoring optical outputs of the first and second light sources (121, 131). A compatible optical pickup device includes a light emitting module having one of the above structures, an objective lens for focusing first and second laser beams on an optical recording medium, an optical path converting device, a grating arranged on an optical path between the light emitting module and the optical path converting device for diffracting and transmitting an incident light, and a photodetector.

## Description

The present invention relates to a light emitting module for emitting a laser light beam and a compatible optical pickup device adopting the same, and more particularly, to a light emitting module in which two light sources respectively emitting two light beams of different wavelengths are packaged into a single module, and to a compatible optical pickup device adopting the same so that recording media of different formats can be compatibly used.

A typical optical pickup device is adopted in CD (compact disk) players, CD-ROM drives, DVD (digital versatile disk) players, and DVD-ROM drives to perform recording/reproducing information on and from a recording medium in a non-contact manner.

The DVD players and DVD-ROM drives are noted in the video/audio field for their high density recording/reproducing capabilities. For the reason of compatibility, the optical pickup device adopted in the DVD players should be able to record and/or reproduce information on and from not only DVDs but also the CD family such as CDs, CD-Rs (CD-recordable), CD-RWs (CD-rewritable), CD-Is (CD-interactive) and CD-Gs (CD graphics).

However, the thickness of a DVD is standardized into a different specification from that of other CD family due to the allowable error in disk inclination and the numerical aperture of an objective lens. That is, the thickness of existing CD family is 1.2 mm while the thickness of a DVD is 0.6 mm. As the thicknesses of the CD family and the DVD are different, when the optical pickup device for a DVD is used for the CD family, spherical aberration occurs due to the difference in thickness. The spherical aberration causes insufficient light intensity needed for recording of information signals or deterioration of signals when the signals are reproduced.

Also, the DVD is standardized differently from the CD family in the wavelength of a reproduction light source. That is, the wavelength of a reproduction light source for existing CD family is about 780 nm while the wavelength of a reproduction light source for the DVD is about 650 nm.

Thus, as typical CD players are not able to reproduce information recorded on a DVD due to the above differences, development of an optical pickup device for DVD is requested. Here, the optical pickup device for DVD should be compatible for the existing CD family.

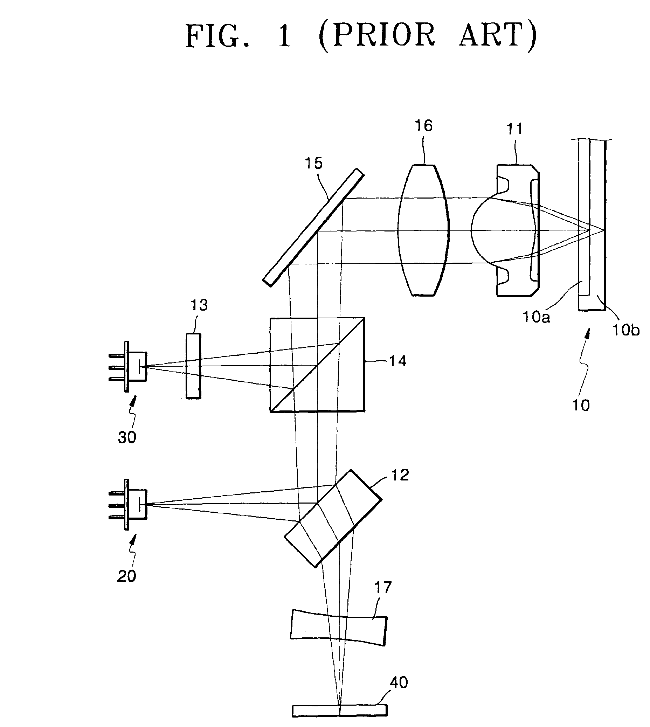

To solve the above problems, a conventional compatible optical pickup device, as shown in Figure 1, includes a first optical module 20 for emitting a light ray having a 650 nm wavelength, a second optical module 30 for emitting a light ray having a 780 nm wavelength, first and second beam splitters 12 and 14 for changing proceeding paths of the light rays emitted from the first and second optical modules 20 and 30, respectively, an objective lens 11 for focusing an incident ray on a disk 10, and an optical detector 40 for receiving light reflected by the disk 10 and passing the second beam splitter 14 and the first beam splitter 12. Here, the first optical module 20 is for a relatively thin disk 10a such as a DVD and the second optical module 30 is for a relatively thick disk 10b such as a CD family.

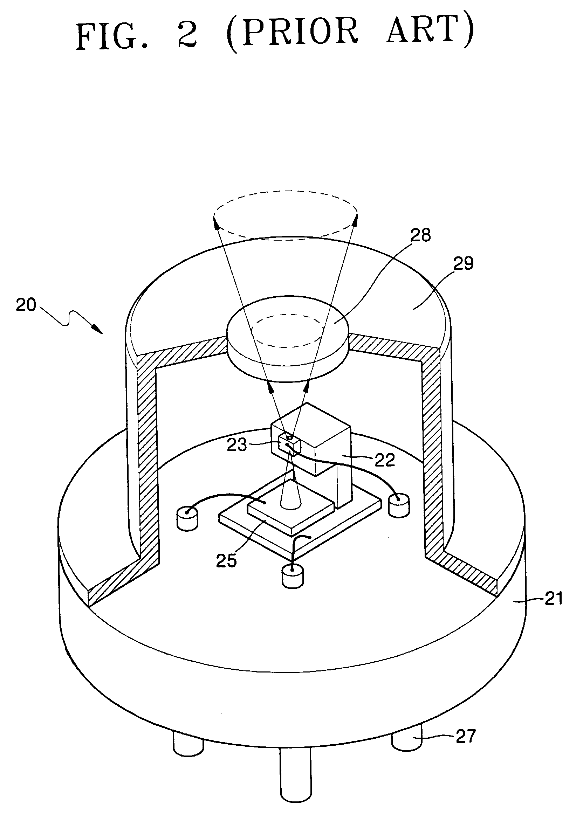

The first optical module 20, as shown in Figure 2, includes a base 21 where a plurality of lead pins 27 are installed, a heat sink 22 installed at the base 21, a light source 23 installed at the side surface of the heat sink 22, a monitoring photodetector 25 for monitoring the optical output of the light source 23 by receiving the light emitted to the rear of the light source 23, and a cap 29 having a projection window 28 and encompassing the light source 23 and the monitoring photodetector 25. As the monitoring photodetector 25 uses the light emitted to the rear of the light source 23, there is a need to restrict the upper limit value of reflection rate of the light source 23 to about 50-60 % considering the optical output of the rear side of the light source 23.

As the structure of the second optical module 30 is substantially the same as that of the first optical model 20, a detailed description thereof will be omitted. However, the second optical module 30 is different from the first optical module 20 in that it adopts a light source for emitting light of about 780nm wavelength.

The first beam splitter 12 having a flat panel structure reflects the light emitted from the first optical module 20 to proceed toward the second beam splitter 14. The second beam splitter 14 has a cubic structure having a mirror surface to transmit or reflect the incident light.

The light emitted from the first optical module 20 transmits the second beam splitter 14 after being reflected by the first beam splitter 12 and proceeds toward the optical disk 10. The light emitted from the first optical module 30 is reflected by the second beam splitter 14 and focused by the objective lens 11 and finally lands on the optical disk 10. Here, a grating 13 for diffracting the incident light is arranged between the second optical module 30 and the second beam splitter 14.

A reflection mirror 15 for reflecting the incident light and a collimating lens 16 for focusing the incident light are arranged along an optical path between the second beam splitter 14 and the objective lens 11 considering the optical arrangement.

The light emitted from the first optical module 20 is reflected by the disk 10a which is relatively thinner and received by the photodetector 40. The light emitted from the second optical module 30 is reflected by the disk 10b which is relatively thicker and received by the photodetector 40. That is, the RF (radio frequency) signals of the lights emitted from the first and second optical modules 20 and 30 is detected by a single photodetector 40. Here, a sensor lens 17 is arranged between the first beam splitter 12 and the photodetector 40.

In the process of adjustment of the first and second optical modules 20 and 30 and the photodetector 40 of the compatible pickup device having the above structure, first, the photodetector 40 is adjusted so that reproduction of servo and RF signals is possible by fixing the first optical module 20 including the semiconductor laser 23 for emitting light of a 650nm wavelength and disposing the light emitted from the first optical module 20 and reflected by the optical disk 10 after passing the first and second beam splitters 12 and 14 and the objective lens 11, at the photodetector 40. Then, the second optical module 30 is adjusted so that the light emitted from the second optical module 30 and reflected by the optical disk 10 can accurately focused on the photodetector 40.

Thus, the conventional compatible optical pickup device having the above structure has the drawbacks as follows.

First, as at least one of the first optical module, the second optical module and the photodetector must be adjusted, assembly is inconvenienced and the rate of assembly defects increases.

Second, as the first and second optical modules are adopted in the separated locations, miniaturization of the optical pickup is difficult.

Third, as two monitoring photodetectors for adjusting the optical output of each light source are required, a circuit wiring is complicated.

With a view to solve or reduce the above problems, it is an aim of embodiments of the present invention to provide a light emitting module having an improved structure by which the optical configuration is simplified and the number of the parts are reduced and a compatible optical pickup device adopting the same.

According to a first aspect of the present invention there is provided a light emitting module comprising: a base; first and second light sources installed on the base, for emitting laser beams in different wavelength regions; a beam splitter for splitting the beams emitted from the first and second light sources; and a monitoring photodetector for monitoring the optical outputs of the first and second light sources by receiving the beams emitted from the first and second light sources and split from the beam splitter in one direction.

According to a second aspect of the invention, there is provided an optical pickup device comprising: a light emitting module having a base, first and second light sources installed on the base, for emitting laser beams in different wavelength regions, a beam splitter for splitting the beams emitted from the first and second light sources, and a monitoring photodetector for monitoring the optical outputs of the first and second light sources by receiving the beams emitted from the first and second light sources and split from the beam splitter in one direction; an objective lens disposed on the optical path between the light emitting module and an optical recording medium, for focusing the beams emitted from the first and second light sources onto the optical recording medium; an optical path converting device disposed on the optical path between the light emitting module and the objective lens, for converting the proceeding path of an incident beam; and a photodetector for receiving the beams emitted from the first and second light sources, reflected from the optical recording medium and input via the optical path converting device.

The module or device may comprise a heat sink on the base, and wherein the first and second light sources are mounted on a lateral surface of and on the top surface of the heat sink.

The device or module preferably comprises a cap having an emission hole through which the beams emitted from the first and second light sources and split from the beam splitter in different directions are emitted and installed on the base to enclose the first and second light sources, the beam splitter and the monitoring photodetector.

The emission hole of the cap is preferably sealed by the beam splitter.

According to a third aspect of the invention, there is provided a light emitting module comprising: a substrate; a first light source, installed on the substrate, for emitting a laser beam of a wavelength from both lateral sides thereof ; a second light source, installed on the substrate by being separated a predetermined distance from the first light source, for emitting a laser beam of a wavelength different from that of the laser beam emitted from the first light source from both lateral sides thereof; a reflection member, arranged on the substrate between the first light source and the second light source, for reflecting the laser beam emitted from one lateral side of each of the first and second light sources to proceed in one direction; first and second monitoring photodetectors for receiving the laser beam emitted from the other lateral side of each of the first and second light sources and monitoring optical outputs of the first and second light sources; a package frame encompassing the substrate, the first and second light sources, the reflection member and the first and second photodetectors; and a lead frame formed by penetrating the package frame and wire-bonded to the first and second light sources and the first and second monitoring photodetectors.

According to a fourth aspect of the invention, there is provided an optical pickup device comprising: a light emitting module including a substrate, first and second light sources installed on the substrate for emitting laser beams of first and second wavelengths from both lateral sides thereof, a reflection member arranged on the substrate between the first and second light sources for reflecting the laser beam emitted from one lateral side of each of the first and second light sources to proceed in one direction, and first and second monitoring photodetectors for receiving the laser beam emitted from the other lateral side of each of the first and second light sources and monitoring optical outputs of the first and second light sources; an objective lens arranged on an optical path between the light emitting module and an optical recording medium for focusing the incident first and second laser beams on the optical recording medium; an optical path converting device arranged on an optical path between the light emitting module and the objective lens for converting a proceeding path of an incident light; a grating arranged on an optical path between the light emitting module and the optical path converting device for diffracting and transmitting an incident light; a photodetector for receiving an incident light emitted from the first and second light sources and reflected by the optical recording medium and passing the optical path converting device; and a holographic device arranged on an optical path between the optical path converting device and the photodetector for diffracting and transmitting an incident light.

Preferably, the reflection member comprises: a base integrally formed with the substrate and including first and second surfaces having a predetermined degree of inclination; and first and second reflection portions, respectively formed at the first and second surfaces, for reflecting the incident lights emitted from the first and second light sources.

The light emitting module of the third aspect or the device wherein preferably the first and second light sources emit laser beams of about 650 nm and 780 nm wavelengths, respectively, and the first and second light sources are arranged such that the length on an optical axis between an exhaust surface of the second light source and the reflection member is relatively greater than the length on an optical axis between an exhaust surface of the first light source and the reflection member.

The light emitting module of the third aspect or the device of the fourth aspect wherein preferably, in the substrate, a pair of guide grooves for guiding the position where the first and second light sources are attached is formed to be indented at the positions where the first and second light sources are attached.

The light emitting module of the third or the device of the fourth aspect may further comprise an emission hole through which the light emitted from the first and second light sources and reflected by the reflection member is emitted, and a cap installed on the package frame to encompass the first and second light sources, the reflection member and the first and second monitoring photodetectors.

Preferably, the grating and the holographic device are arranged such that the diffraction directions of the light diffracted by each of the grating and the holographic device forms a right angle, and the photodetector comprises: first and second photodetectors, arranged to be separated a predetermined distance, for receiving lights diffracted by the grating into the 0th-order light and diffracted again into the +1st-order light and the -1st-order light at the holographic device, respectively; and third and fourth photodetectors, arranged to be separated a predetermined distance with respect to the first and second photodetector, for receiving lights diffracted by the grating into the +1st-order and -1st-order lights and diffracted again into the +1st-order light and the -1st-order light by the holographic device, respectively.

Preferably, to detect a track error signal (TES) in a phase difference method, the first photodetector comprises four split plates (A, B, C and D) having an arrangement of 2×2 and one split plate (G1) arranged between the split plates A and B and the split plates C and D, and the second photodetector comprises three split plates (G2, H and G3) to detect a focus error signal (FES) by differentiation with a signal detected by the first photodetector.

For a better understanding of the invention, and to show how embodiments of the same may be carried into effect, reference will now be made, by way of example, to the accompanying diagrammatic drawings in which:
Figure 1 is a view showing the optical arrangement of the conventional compatible optical pickup device;
Figure 2 is a perspective view showing the first light emitting module adopted in the optical pickup device shown in Figure 1;
Figure 3 is a plan view showing the optical arrangement of a light emitting module according to a first preferred embodiment of the present invention;
Figure 4 is a view showing the optical arrangement of an apparatus for matching light emitting points of the first and second light sources of the light emitting module according to the first preferred embodiment of the present invention;
Figure 5 is a view showing the optical arrangement of a compatible optical pickup device according to a first preferred embodiment of the present invention;
Figure 6 is a graph showing the property of transmissivity of the beam splitter of the light emitting module according to the first preferred embodiment of the present invention;
Figure 7 is a plan view showing the optical arrangement of a light emitting module according to a second preferred embodiment of the present invention;
Figure 8 is a sectional view showing the light emitting module according to the second preferred embodiment of the present invention;
Figure 9 is a view showing the optical arrangement of the compatible optical pickup device according to a second preferred embodiment; and
Figure 10 is a view showing the optical arrangement of the photodetector of the compatible optical pickup device according to a second preferred embodiment.

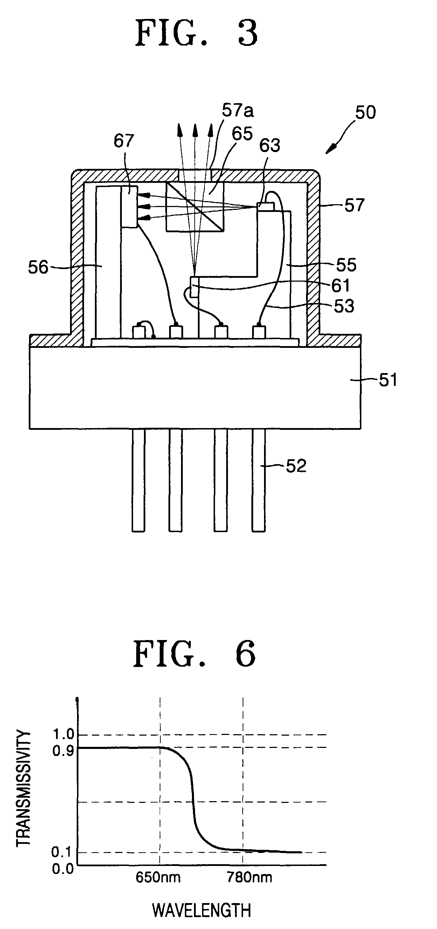

Referring to Figure 3, a light emitting module 50 according to the present invention includes a base 51, first and second light sources 61 and 63 provided on the base 51, for emitting laser beams in different wavelength regions, a beam splitter 65 for splitting the beams emitted from the first and second light sources 61 and 63, a monitoring photodetector 67 for monitoring the optical outputs of the first and second light sources 61 and 63 by receiving the beams split from the beam splitter 65 in one direction, and a cap 57 provided on the base 51 and enclosing the first and second light sources 61 and 63, the beam splitter 65 and the monitoring photodetector 67.

First and second heat sinks 55 and 56 are further provided on the base 51. The first light source 61 is installed on a lateral surface of the first heat sink 55 and emits a beam in a vertical direction with respect to the base 51. The second light source 63 is installed on the top surface of the first heat sink 55 and emits a beam in a direction parallel to the base 51. Also, the monitoring photodetector 67 is installed on a lateral surface of the second heat sink 56 to face the second light source 63 with the beam splitter 65 disposed therebetween.

The first and second light sources 61 and 63 and the monitoring photodetector 67 are electrically connected to an external driver (not shown) by wires 53 and a plurality of leads 52 installed to penetrate the base 51. The first and second light sources 61 and 63 are semiconductor lasers for irradiating beams having different wavelengths. For example, the first light source 61 emits a beam in a wavelength region of approximately 635 to 650 nm, and the second light source 63 emits a beam in a wavelength region of approximately 780 nm.

The beam splitter 65 is disposed between the first and second light sources 61 and 63 and the monitoring photodetector 67 and makes most of beams emitted from the first and second light sources 61 and 63 directed outside the cap 57 through an emission hole 57a formed on the cap 57 and a part of the beams directed to the monitoring photodetector 67. Here, the emission hole 57a is preferably sealed by the beam splitter 65.

The monitoring photodetector 67 utilizes the split beam via the beam splitter 67 among the beams emitted from the first and second light sources 61 and 63. In other words, part of effective beams emitted from the first and second light sources 61 and 63 is used. Since the beams emitted to the rear surfaces of the first and second light sources 61 and 63 are not necessary, the structures of the first and second light sources 61 and 63 can be improved such that the reflectivity is substantially 99% or more, thus improving the optical output efficiency. Also, since the life of a semiconductor laser is proportional to the square of the optical output thereof, the life can be greatly prolonged.

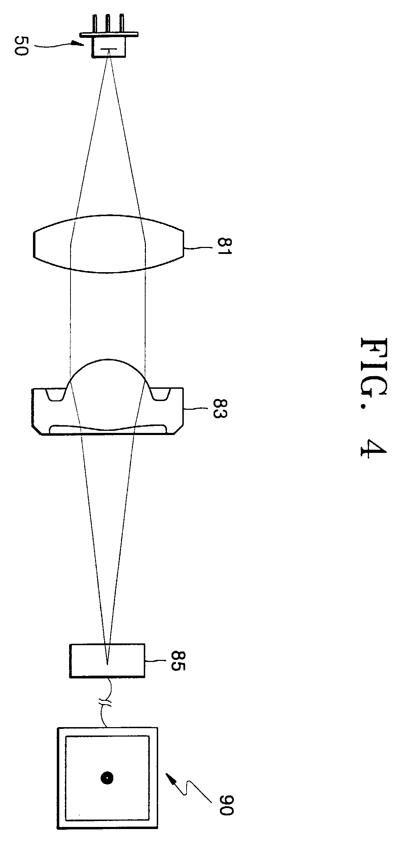

In the light emitting module 50 having the aforementioned configuration, the assembly work for coinciding the illumination points of the first and second light sources 61 and 63 is performed using a system shown in Figure 4.

The beam emitted from the first light source 61 of the light emitting module 50 and diverging via the beam splitter 65 is enlarged and formed on a CCD (Charge Coupled Device) camera 85 through a collimating lens 81 and a focusing lens 83. Here, while the spot formed on the CCD camera 85 is observed by enlarging the same through a monitor 90, the position of the first light source 61 is adjusted and to fix it on the lateral surface of the first heat sink 55. Then, while the spot formed on the CCD camera 85 is observed through the monitor 90, the position of the second light source 63 is adjusted to then be fixed on the top surface of the first heat sink 55.

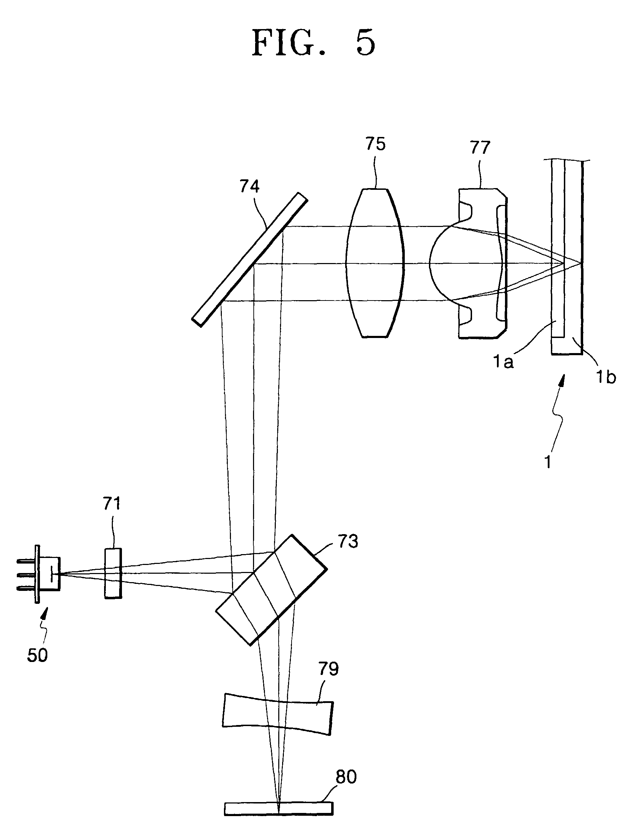

Referring to Figures 3 and 5, the compatible optical pickup device according to the present invention includes the light emitting module 50 having the first and second light sources 61 and 63 integrally formed therein, an objective lens 77 for focusing the beams emitted from the first and second light sources 61 and 63 onto an optical recording medium 1, a light path converting device for converting the proceeding path of an incident beam, and a photodetector 80 for receiving the beams emitted from the first and second light sources 61 and 63, reflected from the optical recording medium 1 and then input via the light path converting device. Here, as the structure of the light emitting module 50 is the same as that described with reference to Figure 3, a description thereof will be omitted.

The first light source 61 is used when a relatively thin optical disk 1a, for example, a DVD, is employed as the optical recording medium 1, and emits a laser in a wavelength region of approximately 635 to 650 nm. The second light source 63 is used when a relatively thick optical disk 1b, for example, a CD, is employed as the optical recording medium 1, and emits a laser in a wavelength region of approximately 780 nm.

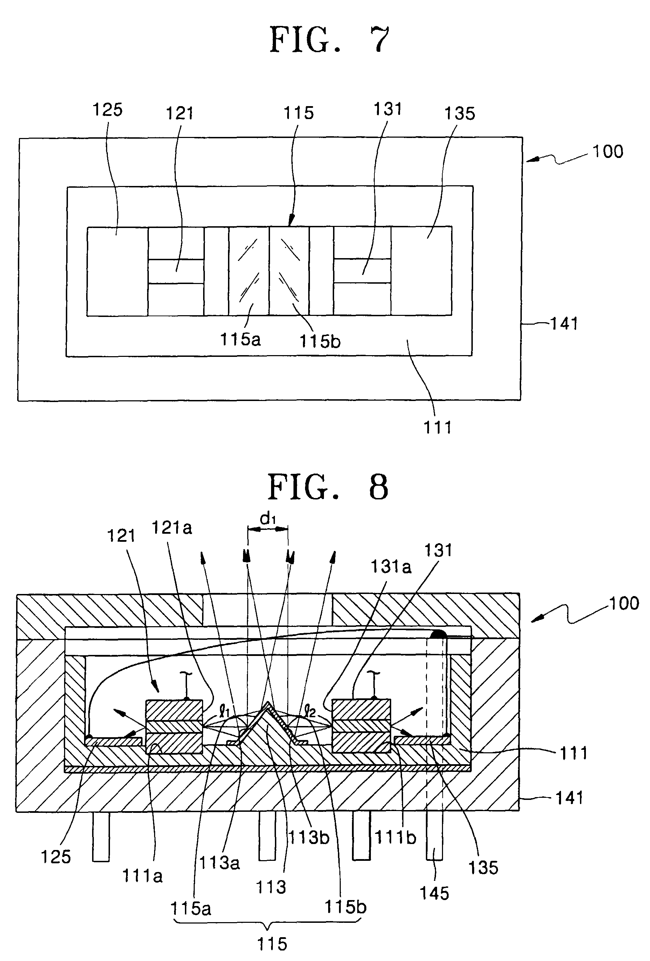

Referring to Figure 6, the beam splitter 65 is designed to transmit approximately 90% of beams with respect to the about 650 nm wavelength region and approximately 10% of beams with respect to the about 780 nm wavelength region. That is, the beam splitter 65 transmits most of the beams emitted from the first light source 61 and reflects part of the beams. Also, the beam splitter 65 reflects most of the beams emitted from the second light source 63 and transmits part of the beams. Thus, most of the beams emitted from the first and second light sources 61 and 63 are directed toward the optical recording medium 1 via the beam splitter 65 and only part of the beams is directed to the monitoring photodetector 67.

The light path converting device is provided on the optical path between the light emitting module 50, the objective lens 77 and the photodetector 80 and makes the beam emitted from the light emitting module 50 directed to the optical recording medium 1, and the beam reflected from the optical recording medium 1 directed to the photodetector 80. The light path converting device is preferably a flat-panel type beam splitter 73, as shown in Figure 5. Also, a cubic beam splitter, a polarized beam splitter or a hologram device may be employed.

Here, in order to detect a track error signal by the photodetector in a three-beam method, it is preferred that a grating 71 for diffracting and transmitting the beam emitted from the light emitting module 50 into a 0th-order beam, ±1st-order beam and the like, is further provided on the optical path between the light emitting module 50 and the flat-panel type beam splitter 73.

Also, optical elements including a mirror 74 for reflecting an incident beam to change the proceeding path thereof and a collimating lens 75 for focusing an incident divergent beam and making the same into a collimated beam may be provided on the optical path between the flat-panel type beam splitter 73 and the objective lens 77.

The photodetector 80 receives beams emitted from the first and second light sources 61 and 63 and input via the optical recording medium 1 and detects an information signal and a servo signal therefrom.

Here, an astigmatic lens 79 is preferably provided on the optical path between the flat-panel type beam splitter 73 and the photodetector 80 to detect a focus error signal in an astigmatism method. The astigmatic lens 79 is preferably disposed to be inclined on the optical path so as to correct the aberration due to inclination of the flat-panel type beam splitter 73.

In the operation of the compatible optical pickup device having the aforementioned configuration, when the relatively thin optical disk 1a such as a DVD is employed as the optical recording medium 1, the beam emitted from the first light source 61 is utilized. In other words, most of the beams emitted from the first light source 61 pass through the beam splitter 65 and then diffracted from the grating 71 into at least three beams. The diffracted beams are reflected from the beam splitter 73 and the mirror 74 and collimated by the collimating lens 75 to be directed to the objective lens 77. The objective lens 77 focuses an incident beam to be formed on the optical disk 1a which is relatively thin. The beams reflected from the optical disk 1a are directed to the flat-panel type beam splitter 73 via the objective lens 77, the collimating lens 75 and the mirror 74. These beams pass through the flat-panel type beam splitter 73 and land on the photodetector 80 via the sensing lens 79. The photodetector 80 detects the information signal and focus error signal for the thin optical disk 1a from the incident beam and the track error signal from the beams diffracted by the grating 71.

The beams emitted from the first light source 61 and reflected from the beam splitter 65 of the light emitting module 50 land on the monitoring photodetector 67, and the optical output of the first light source 61 is controlled by an optical output control circuit (not shown) disposed between the first light source 61 and the monitoring photodetector 67.

When the relatively thick optical disk 1b such as a CD is employed as the optical recording medium 1, the beam emitted from the second light source 63 is utilized. In this case, most of the beams emitted from the second light source 63 is reflected from the beam splitter 65 to be directed to the optical recording medium 1. Here, compared to the beam emitted from the first light source 61, the operation of the beam is substantially the same except for a fact that the beam is focused by the objective lens 77 on the relatively thick optical disk 1b, so that a detailed description thereof will be omitted.

The beam emitted from the second light source 63 and transmits the beam splitter 65 is focused on the monitoring photodetector 67, and the optical output of the second light source 63 is controlled by an optical output control circuit (not shown) disposed between the second light source 61 and the monitoring photodetector 67.

The aforementioned light emitting module and the compatible optical pickup device according to the first preferred embodiment of the present invention have the following advantages.

First, since first and second light sources are installed in a single optical module, the assembling of an optical pickup device is simplified like in a DVD- or CD-dedicated optical pickup device.

Second, since a monitoring photodetector is used for plural wavelengths, the circuitry of an optical output controller is simplified.

Third, since a monitoring photodetector utilizes a part of effective beams emitted from first and second light sources, optical outputs in the rear surfaces of the first and second light sources are not necessary.

Thus, the optical output efficiency can be greatly increased by changing the structures of the light sources.

Referring to Figures 7 and 8, a light emitting module 100 according to a second preferred embodiment of the present invention includes a substrate 111, first and second light sources 121 and 131 arranged on the substrate 111 for emitting laser beams in different wavelength regions, a reflection member 115 for allowing the light emitted from the first and second light sources 121 and 131 to proceed in one direction, first and second monitoring photodetectors 125 and 135 for monitoring the optical outputs of the first and second light sources 121 and 131, respectively, by receiving the light emitted from the first and second light sources 121 and 131, a package frame 141, and a plurality of lead frames 145.

The substrate 111 is formed of a silicon material and has an inner space where the first and second light sources 121 and 131 and the first and second monitoring photodetectors 125 and 135 are installed. Here, the inner space is made by etching.

The first light source 121 is installed in the inner space of the substrate 111 and emits a laser beam of a predetermined wavelength, for example, 650 nm, from both lateral sides thereof. Of the lights emitted from the first light source 121 in two directions, the light in one direction proceeds toward the reflection member 115 and the light in the other direction proceeds toward the first monitoring photodetector 125.

The second light source 131 is installed on the substrate 111 by being separated a predetermined distance with respect to the first light source 121 and emits a laser beam of a predetermined wavelength, for example, 780 nm, from both lateral sides thereof. The light in one direction of the lights emitted by the second light source 131 in two directions proceeds toward the reflection member 115 and the light in the other direction proceeds toward the second monitoring photodetector 135.

Preferably, in the inner space of the substrate 111, a pair of guide grooves 111a and 111b for guiding the positions where the first and second light sources 121 and 131 are attached are formed to be indented at the positions where the first and second light sources 121 and 131 are attached. Thus, by minimizing an error in the attachment of the first and second light sources 121 and 131 with respect to the substrate 111, the amount of relative shift of the optical axes of the first and second light sources 121 and 131 can be accurately controlled.

The reflection member 115 is installed at the substrate 111 between the first and second light sources 121 and 131 and makes the laser beam emitted from one side of each of the first and second light sources 121 and 131 proceed in one direction. The reflection member 115 is integrally formed with the substrate 111 and includes a base 113 having the first and second surfaces 113a and 113b arranged to be inclined a predetermined angle with respect to each of the first and second light sources 121 and 131, and first and second reflection portions 115a and 115b formed at the first and second surfaces 113a and 113b for reflecting the light input from the first and second light sources 121 and 131.

The base 113 is formed by etching the substrate 111 when the inner space is formed, and the angles between the first surface 113a and the substrate 111, and the second surface 113b and the substrate 111 are preferably 45°. Here, as the silicon selected as a material for the substrate 111 has a crystalline structure of a cubic shape, the etching at an angle of 45° is easy. The first and second reflection portions 115a and 115b are preferably formed by reflection coating on the first and second surfaces 113a and 113b of the base 113. Thus, the two lights emitted from the first and second light sources 121 and 131 and reflected by each of the first and second reflection portions 115a and 115b proceed parallel to each other while maintaining a distance d₁ between the optical axes thereof.

Also, it is preferable that length l₂ of the optical axis between the exhaust surface 131a of the second light source 131 and the reflection member 115 is arranged to be relatively greater than length l₁ of the optical axis between the exhaust surface 121a of the first light source 121 and the reflection member 115. This is to consider the change in size of the section of the exhaust light due to the difference in wavelength of the exhaust light when the light is emitted from the first and second light sources 121 and 131 and passes the optical elements.

The respective first and second photodetectors 125 and 135, arranged on the substrate 111, receives the lights emitted from the first and second light sources121 and 131 to monitor the optical outputs of the first and second light sources 125 and 135, respectively. Here, the first and second monitoring photodetectors 125 and 135 are preferably manufactured through a semiconductor process of depositing a p-type semiconductor layer and an n-type semiconductor layer at the corresponding positions on the substrate 111. Also, it is possible to manufacture the first and second monitoring photodetectors 125 and 135 through the semiconductor process with respect to an additional substrate (not shown) and attach them on the side wall of the substrate.

The package frame 141 encompasses the substrate 111, the first and second light sources 121 and 131, a reflection member 115 and the first and second monitoring photodetectors 125 and 135, thus incorporating them in a package. The package frame 141 is formed of a material such as molding resin.

The lead frames 145 penetrate the package frame 141 and each end thereof is wire-bonded to the first and second light sources 121 and 131 and the first and second monitoring photodetectors 125 and 135. The lead frames 145 consist of one lead for grounding the substrate 111, two leads for providing driving power to each of the first and second light sources 121 and 131, and one lead for transmitting electric signals detected by the first and second monitoring photodetectors 125 and 135. Here, as the first and second light sources 121 and 131 are selectively driven, it is possible to commonly use a single lead with respect to the first and second monitoring photodetectors 125 and 135.

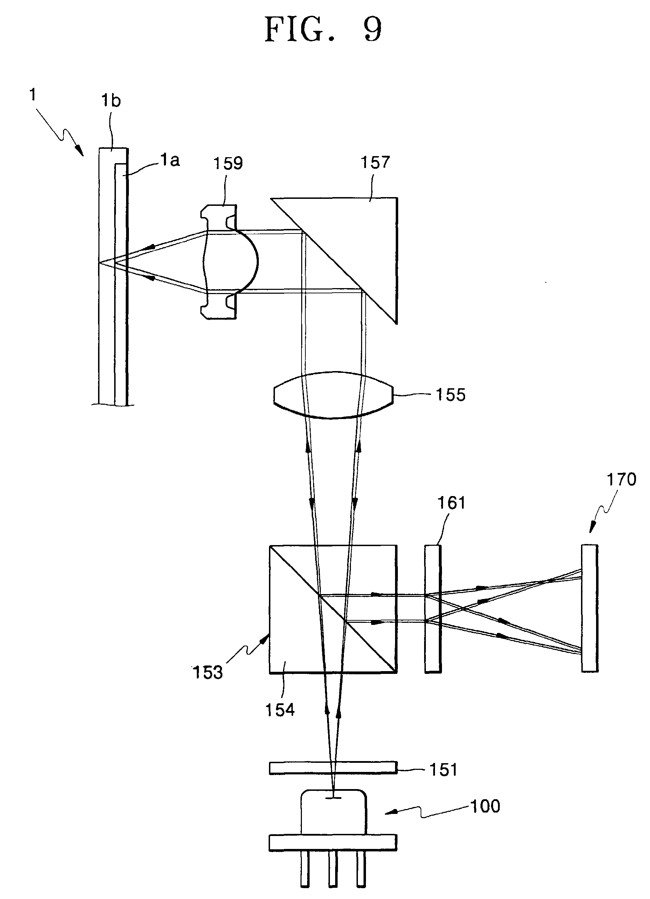

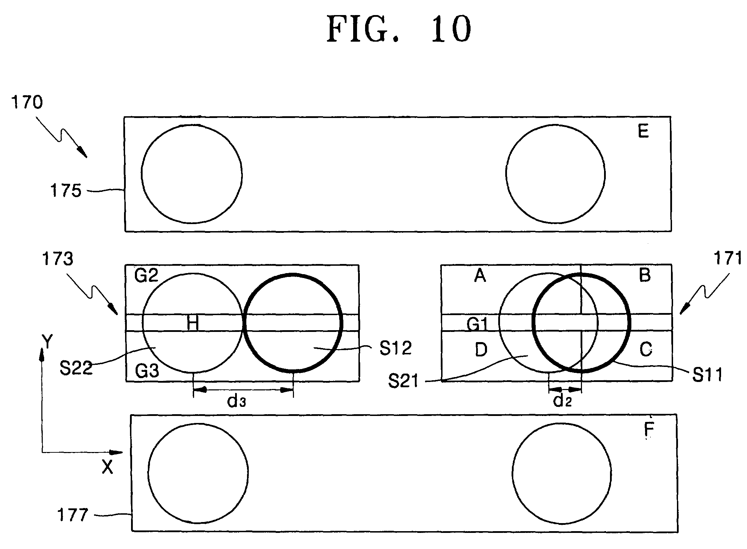

Referring to Figures 9 and 10, a compatible optical pickup device according to a second preferred embodiment of the present invention includes a light emitting module 100, an objective lens 159 for focusing the light emitted from the light emitting module 100 on an optical recording medium 1, an optical path converting device 153 for converting a proceeding path of the incident light, a grating 151 arranged on the optical path between the light emitting module 100 and the optical path converting device 153 for diffracting and transmitting the incident light, a photodetector 170 for receiving the incident light which is emitted from the light emitting module 100, reflected by the optical recording medium 1 and passes the optical axis converting device 153, and a holographic device 161 arranged on the optical axis between the optical path converting device 153 and the photodetector 170.

As the light emitting module100 is the same as that described with reference to Figures 7 and 8, a detailed description thereof will be omitted.

The first light source 121 is utilized when a relatively thinner optical disk 1a, for example, a DVD, is adopted, which emits a light beam of about 635 through 650 nm. The second light source 131 is utilized when a relatively thicker optical disk 1b, for example, a CD, is adopted, which emits a light beam of about 780 nm. Preferably, the first and second light sources 121 and 131 are arranged such that the length l₂ on the optical axis between the exhaust surface of the second light source 131 and the reflection member 115 is relatively greater than the length l₁ on the optical axis between the exhaust surface of the first light source 121 and the reflection member 115.

The grating 151, arranged on the optical axis between the light emitting module 100 and the optical path converting device 153, diffracts and transmits the incident light, in particular, the light emitted from the second light source 131 into the 0th-order light, the ±1st-order light, and the like. Accordingly, a track error signal of the light reflected by the relatively thicker optical recording medium 1b can be detected by a three-beam method.

The optical path converting device 153 is configured with a beam splitter 154 of the same structure described above. The beam splitter 154 converts a proceeding path of the light so that the light emitted from the light emitting module 100 to proceed toward the optical recording medium 1 and the light reflected by the optical recording medium 1 to proceed toward the photodetector 170.

The holographic device 161, arranged on the optical axis between the beam splitter 154 and the photodetector 170, diffracts and transmits the incident light into the +1st-order light and -1st-order light. As the +1st-order light and -1st-order light separated by the holographic device 161 are focused on different focal points, an astigmatism method is used for detecting a focus error signal. That is, during on-focus, the +1st-order light diffracted and transmitted by the holographic device 161 focuses in front of the photodetector 170. The -1st-order light focuses at the rear of the photodetector 170. Here, the diffraction direction at the grating 151 and the diffraction direction at the holographic device 161 are preferably arranged to form a right angle.

The photodetector 170 includes first through fourth photodetectors 171, 173, 175 and 177 configured with ten of split plates, each performing photoelectric conversion independently.

The first and second photodetectors 171 and 173, arranged to be separated a predetermined distance, receive the light diffracted by the grating 151 into the 0th-order light and diffracted again into the +1st-order light and the -1st-order light at the holographic device 161. To detect a track error signal (TES) with respect to the relatively thin optical recording medium 1a in a phase difference method, the first photodetector 171 includes four split plates A, B, C and D having an arrangement of 2×2 and one split plate G1 arranged between the split plates A and B, and the split plates C and D. Here, the boundary portion between the split plates A and D and the split plates B and C of the first photodetector 171 is disposed to correspond to the portion where the center of an optical spot S11 focused on the first photodetector 171 passes.

The second photodetector 173 includes three split plates G2, H and G3 to detect a focus error signal (FES) through differentiation with the signal detected by the first photodetector 171.

The three and fourth photodetectors 175 and 177, arranged to be separated a predetermined distance from each other with respect to the first and second photodetectors 171 and 173, receive the light diffracted by the grating 151 into the +1st-order light and -1st-order light and diffracted again into the +1st-order light and -1st-order light at the holographic device161, respectively.

Here, as to the light received by the first photodetector 171, the optical spot S11 emitted from the first light source 121 is focused to be separated a predetermined distance d₂ from an optical spot S21 emitted from the second light source 131 and focused. As to the light received by the second photodetector 173, an optical spot S12 emitted from the first light source 121 is focused to be separated a predetermined distance d₃ from an optical spot S22 emitted from the second light source 131 and focused.

This is because the first and second light sources 121 and 131 are arranged to be separated a distance d₁ from each other with respect to the substrate 111 and a difference in diffracting angle according to the wavelength occurs at the holographic device 161. In particular, the difference between the distances d₂ and d₃ occurs because, in a case of the +1st-order light, the shift amount of two lights is less than a case of -1st-order light as the light of 780 nm wavelength has a diffracting angle greater than the light of 650 nm wavelength.

By the first through fourth photodetectors 171, 173, 175 and 177, the track error signal, the focus error signal and an information signal with respect to the two optical recording mediums 1a and 1b having the different thicknesses, for example, a DVD and a CD, are obtained through the addition and subtraction as follows.$\begin{matrix}\begin{matrix}{\text{DVD focus error signal = (G}}_{\text{1}} {\text{+G}}_{\text{2}} {\text{+G}}_{\text{3}} \text{) - (A+B+C+D+H)} \\ {\text{DVD track error signal = (A+C)}}_{\text{PHASE}} {\text{- (B+D)}}_{\text{PHASE}} \\ {\text{CD focus error signal = (G}}_{\text{1}} {\text{+G}}_{\text{2}} {\text{+G}}_{\text{3}} \text{) - (A+B+C+D+H)} \\ \text{CD track error signal = E - F} \\ \text{DVD, CD information signal = A+B+C+D+G+H}\end{matrix}\end{matrix}$

Also, it is preferable that the optical pickup device according to the present invention further includes optical elements such as a mirror 157 arranged on the optical axis between the beam splitter 154 and the objective lens 159 for converting the optical path by reflecting the incident light, and a collimating lens 155 for making a parallel beam by focusing divergent light which is input.

In the operation of the compatible optical pickup device having the above structure, when the relatively thin optical disk 1a such as a DVD is adopted as the optical recording medium 1, the light emitted from the first light source 121 is used. That is, the light emitted from the first light source 121 transmits the beam splitter 154 and makes a parallel beam by the collimating lens 155 and is reflected by the mirror 157 to proceed to the objective lens 159. The objective lens 159 makes the incident light to focus on the relatively thin optical disk 1a. The light reflected by the optical disk 1a passes the objective lens 159, the mirror 157 and the collimating lens 155 and proceeds to the beam splitter 154. The light is reflected by the beam splitter 154 and the holographic device 161 diffracts the +1st-order light and -1st-order light thereof to focus on the first through four photodetectors 171, 173, 175 and 177. The first through four photodetectors 171, 173, 175 and 177 detect, from the incident light, the information signal with respect to the relatively thin optical disk 1a, the track error signal by the phase difference method, and the focus error signal by the astigmatism method through the holographic device 161.

The light emitted to the rear of the first light source 121 focuses on the first monitoring photodetector 125 so that the optical output of the first light source 121 is controlled by an optical output control circuit (not shown) provided between the first monitoring photodetector 125 and the first light source 121.

When the relatively thick optical disk 1b such as a CD is adopted as the optical recording medium 1, the light emitted from the second light source 131 is used. That is, the light emitted from the second light source 131 transmits the beam splitter 154 after being diffracted into at least three beams by the grating 151 and proceeds to the optical recording medium 1. The light is focused by the objective lens 159 on the relatively thick optical disk 1b and then reflected therefrom and passes the objective lens 159, the beam splitter 154 and the holographic device 161 to focus on the first through fourth photodetectors 171, 173 , 175 and 177. The first through four photodetectors 171, 173, 175 and 177 detect, from the incident light, the information signal with respect to the relatively thick optical disk 1b, the track error signal by the three beam method, and the focus error signal by the astigmatism method through the holographic device 161.

The light emitted to the rear of the second light source 131 and transmitting the beam splitter 154 focuses on the second monitoring photodetector 135 so that the optical output of the second light source 131 is controlled by an optical output control circuit (not shown) provided between the second monitoring photodetector 135 and the second light source 131.

The light emitting module and the compatible optical pickup device adopting the same according to the present invention having the above structure has the merits as follows.

First, as the first and second light sources are installed in a single optical module, the assembly of the optical pickup device is simplified like a DVD- or CD-dedicated optical pickup device.

Second, as the optical output signal obtained by the monitoring photodetector provided with respect to a plurality of wavelengths is used as a single optical output control signal, wiring of the optical output control circuit is simplified.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A light emitting module comprising:
a base (51);
first and second light sources (61, 63) installed on the base (51), for emitting laser beams in different wavelength regions;
a beam splitter (65) for splitting the beams emitted from the first and second light sources (61, 63); and
a monitoring photodetector (67) for monitoring the optical outputs of the first and second light sources (61, 63) by receiving the beams emitted from the first and second light sources (61, 63) and split from the beam splitter (65) in one direction.

2. An optical pickup device comprising:
a light emitting module having a base (51), first and second light sources (61, 63) installed on the base (51), for emitting laser beams in different wavelength regions, a beam splitter (65) for splitting the beams emitted from the first and second light sources (61, 63), and a monitoring photodetector (67) for monitoring the optical outputs of the first and second light sources (61, 63) by receiving the beams emitted from the first and second light sources (61, 63) and split from the beam splitter (65) in one direction;
an objective lens (77) disposed on the optical path between the light emitting module (50) and an optical recording medium (1), for focusing the beams emitted from the first and second light sources (61, 63) onto the optical recording medium (1);
an optical path converting device (73) disposed on the optical path between the light emitting module (50) and the objective lens (77), for converting the proceeding path of an incident beam; and
a photodetector (80) for receiving the beams emitted from the first and second light sources (61, 63), reflected from the optical recording medium (1) and input via the optical path converting device (73).

3. A light emitting module according to claim 1 or an optical pickup device as claimed in claim 2, further comprising a heat sink (55, 56) on the base, and wherein the first and second light sources (61, 63) are mounted on a lateral surface of and on the top surface of the heat sink (55, 56).

4. A light emitting module as claimed in claim 1 or 3, or a device as claimed in claim 2 or 3, further comprising a cap (57) having an emission hole (57a) through which the beams emitted from the first and second light sources (61, 63) and split from the beam splitter (65) in different directions are emitted and installed on the base (51) to enclose the first and second light sources (61, 63), the beam splitter (65) and the monitoring photodetector (67).

5. A module or device as claimed in claim 4, wherein the emission hole (57a) of the cap is sealed by the beam splitter (65).

6. A light emitting module comprising:
a substrate (111);
a first light source (121), installed on the substrate (111), for emitting a laser beam of a wavelength from both lateral sides thereof;
a second light source (131), installed on the substrate (111) by being separated a predetermined distance from the first light source (121), for emitting a laser beam of a wavelength different from that of the laser beam emitted from the first light source (121) from both lateral sides thereof;
a reflection member (115), arranged on the substrate (111) between the first light source (121) and the second light source (131), for reflecting the laser beam emitted from one lateral side of each of the first and second light sources (121, 131) to proceed in one direction;
first and second monitoring photodetectors (125, 135) for receiving the laser beam emitted from the other lateral side of each of the first and second light sources (121, 131) and monitoring optical outputs of the first and second light sources (121, 131);
a package frame (141) encompassing the substrate (111) , the first and second light sources (121, 131) , the reflection member (115)and the first and second photodetectors (125, 135); and
a lead frame (145) formed by penetrating the package frame (141) and wire-bonded to the first and second light sources (121, 131) and the first and second monitoring photodetectors (125, 135).

7. An optical pickup device comprising:
a light emitting module (100) including a substrate (111), first and second light sources (121, 131) installed on the substrate (111) for emitting laser beams of first and second wavelengths from both lateral sides thereof, a reflection member (115) arranged on the substrate (111) between the first and second light sources (121, 131) for reflecting the laser beam emitted from one lateral side of each of the first and second light sources (121, 131) to proceed in one direction, and first and second monitoring photodetectors (125, 135) for receiving the laser beam emitted from the other lateral side of each of the first and second light sources (121, 131) and monitoring optical outputs of the first and second light sources (121, 131);
an objective lens (159) arranged on an optical path between the light emitting module (100) and an optical recording medium (1) for focusing the incident first and second laser beams on the optical recording medium (1);
an optical path converting device (153) arranged on an optical path between the light emitting module and the objective lens for converting a proceeding path of an incident light;
a grating (151) arranged on an optical path between the light emitting module and the optical path converting device for diffracting and transmitting an incident light;
a photodetector (170) for receiving an incident light emitted from the first and second light sources and reflected by the optical recording medium and passing the optical path converting device; and
a holographic device (161) arranged on an optical path between the optical path converting device (153) and the photodetector (170) for diffracting and transmitting an incident light.

8. The light emitting module as claimed in claim 6 or the device of claim 7, wherein the reflection member (115) comprises:
a base (113) integrally formed with the substrate (111) and including first and second surfaces (113a, 113b) having a predetermined degree of inclination; and
first and second reflection portions (115a, 115b), respectively formed at the first and second surfaces, (113a, 113b) for reflecting the incident lights emitted from the first and second light sources (121, 131).

9. The light emitting module as claimed in claim 6 or 8, or the module of claim 7 or 8, wherein the first and second light sources (121, 131) emit laser beams of about 650 nm and 780 nm wavelengths, respectively, and the first and second light sources (121, 131) are arranged such that the length on an optical axis between an exhaust surface of the second light source (131) and the reflection member (115) is relatively greater than the length on an optical axis between an exhaust surface of the first light source (121) and the reflection member (115).

10. The light emitting module as claimed in claim 6, 8 or 9 or the device of claim 7, 8 or 9, wherein, in the substrate (111), a pair of guide grooves (111a, 111b) for guiding the position where the first and second light sources (121, 131) are attached is formed to be indented at the positions where the first and second light sources are attached.

11. The light emitting module as claimed in any of claim 6, 8, 9 or 10 or the device of claim 7, 8, 9 or 10, further comprising an emission hole through which the light emitted from the first and second light sources (121, 131) and reflected by the reflection member (115) is emitted, and a cap installed on the package frame to encompass the first and second light sources (121, 131), the reflection member (115) and the first and second monitoring photodetectors (125, 135).

12. The compatible optical device as claimed in any of claims 7 to 11, wherein the grating (151) and the holographic device (161) are arranged such that the diffraction directions of the light diffracted by each of the grating (151) and the holographic device (161) forms a right angle, and the photodetector (170) comprises:
first and second photodetectors, arranged to be separated a predetermined distance, for receiving lights diffracted by the grating into the 0th-order light and diffracted again into the +1st-order light and the -1st-order light at the holographic device, respectively; and
third and fourth photodetectors, arranged to be separated a predetermined distance with respect to the first and second photodetector, for receiving lights diffracted by the grating into the +1st-order and -1st-order lights and diffracted again into the +1st-order light and the -1st-order light by the holographic device, respectively.

13. The compatible optical device as claimed in claim 12, wherein, to detect a track error signal (TES) in a phase difference method, the first photodetector comprises four split plates (A, B, C and D) having an arrangement of 2×2 and one split plate (G1) arranged between the split plates A and B and the split plates C and D, and the second photodetector comprises three split plates (G2, H and G3) to detect a focus error signal (FES) by differentiation with a signal detected by the first photodetector.
